(19) Europäisches Patentamt

European Patent Office

Office européen des brevets

(11) EP 3 798 932 A1

(12) **EUROPEAN PATENT APPLICATION**

(43) Date of publication:
**31.03.2021 Bulletin 2021/13**

(21) Application number: **19199273.4**

(22) Date of filing: **24.09.2019**

(51) Int Cl.:
**G06N 3/12** (2006.01)  **G06N 20/20** (2019.01)
**G06N 5/00** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Robert Bosch GmbH 70442 Stuttgart (DE)**

(72) Inventors:
- **Awad, Noor**
  **79102 Freiburg (DE)**
- **Hutter, Frank**
  **79110 Freiburg (DE)**

(54) **METHOD, APPARATUS AND COMPUTER PROGRAM FOR OPTIMIZING A MACHINE LEARNING SYSTEM**

(57)  The present invention pertains to a method for optimizing values of parameters subject to a cost function. The method comprises the following steps: Defining a budget $b$. Initializing a predetermined number of individual configurations ($pop_s$). Starting an Evolutionary Search until the budget $b$ is depleted. Repeating the steps "Initializing" and "Evolutionary Search" until a predefined maximal budget is reached. The present invention further pertains to a computer program and an apparatus, which are configured to carry out said method.

**Algorithm 1: DEHB**

```
Input:
b_min, b_max - min and max budgets
η - (default η=3)
F - scaling factor (default F = 0.5)
CR - crossover rate (default CR = 0.5)
Output: Return best found configuration in pop
1  s_max = ⌊log_η (b_max/b_min)⌋
2  for s∈ {s_max, s_max-1, ..., 0} do
3      N = ⌈(s_max+1)/(s+1) · η^s⌉
4      b = (b_max/b_min) · η^-s
5      pop_s = sample N random configurations
6      fitness_s = compute (pop, b)
7      begin SH using DE optimization with (NP, b) inner loop
8      for i∈ {0, ..., s} do
9          NP_i = ⌈NP · η^-i⌉
10         b_i = b · η^i
11         pop_i = DE_Optimizer(pop_s, F, CR)
12         k = ⌊NP_i/η⌋
13         if k < NP_min then
14             k = NP_i
15         end
16         pop_s = top_k(pop_i, k)
17     end
18 end
```

⌐10

**Algorithm 2: DE_Optimizer**

```
Input:
f - HPO problem
F - scaling factor (default F = 0.5)
CR - crossover rate (default CR = 0.5)
NP - population size
Output: Return best found individual in pop
1  g = 0, FE = 0;
2  pop_g ← initial_population(NP, D);
3  fitness_g ← evaluate_population(pop_g);
4  FE = NP;
5  while (FE < FE_max) do
6      mutate(pop_g);
7      offspring_g ← crossover(pop_g);
8      fitness_g ← evaluate_population(offspring_g);
9      pop_{g+1}, fitness_{g+1} ← select(pop_g, offspring_g);
10     FE = FE + NP;
11     g = g+1;
12 end
```

⌐11

**Fig. 1**

EP 3 798 932 A1

**Description**

Technical Field

The present invention pertains inter alia to a method for optimizing parameters of a machine learning system by means of a combination of Evolutionary search and bandit-based optimization. The present invention further pertains to an apparatus as well as a computer program, which are configured to carry out the method.

Prior Art

The authors Stefan Falkner, Aaron Klein and Frank Hutter disclose in their publication "BOHB: Robust and efficient hyperparameter optimization at scale." arXiv preprint arXiv:1807.01774 (2018) a method for optimizing hyperparameters for training artificial neural networks combining Bayesian optimization and Hyperband optimization.
The authors Storn, Rainer, and Kenneth Price disclose in their publication "Differential evolution-a simple and efficient heuristic for global optimization over continuous spaces." Journal of global optimization 11.4 (1997): 341-359, an Evolutionary search algorithm.

Advantages of the present invention

While deep learning has allowed learning high-level representations from raw data rather than engineering them manually, nevertheless there remains a substantial manual component in engineering architectures and hyperparameters e.g. for deep learning. For example, hyperparameters may be set by rules-of-thumb or by testing sets of hyperparameters. However, hyperparameter settings strongly affect the performance of deep learning models, e.g. for computer vision. Because hyperparameters strongly influences the convergence during training, they have a high impact during training and can decide whether the training will be successful.
The proposed method advantageously performs the selection of hyperparameter in an automated manner. Such automated optimization has a positive effect on e.g. a classification accuracy, because better optima can be found by optimized hyperparameters during training. Therefore, utilizing the proposed method, it is possible to squeeze out some last percentage points of a machine learning system's performance.
Further advantages of the proposed method are given by its ability to optimize discrete hyperparameters. Therefore, the proposed method works well on all types of neural architecture searches as well as for discrete cost-/loss functions and also for discrete optimization problems.
Furthermore, it is difficult to implement machine learning systems on a computer, which has limited computational resources. Finding an optimal machine learning system architecture is essential for an outstanding performance of the machine learning system on limited resources of a computer.The proposed method has the advantage that by using the hyperparameters determined by the proposed method, machine learning system architectures can be found and trained that are on the best possible way adapted to the limited computational resources.

Disclosure of the present invention

According to a first aspect of the invention, a method for optimizing values of parameters subject to a cost function is proposed. The cost function measures a performance of a system, which is characterized by said parameters. The system can alternatively be parametrized by said parameters. Advantageously, the cost function many comprise a constraint, which can define a condition that the solution must satisfy, e.g. physical boundaries or boundaries of the parameters. The system can be a physical or technical system. The performance can be measured in terms of reaching a predefined goal. The method comprises the following steps:
Defining a current budget. The current budget can be a time budget, optimally or additionally an energy budget. This step is followed by initializing a predetermined number of individual configurations, wherein each individual configuration comprises a set of possible values for said parameters. Advantageously, a sampling from a uniform distribution is carried out to cover the whole search space for first initializing. Later on, other distributions may be advantageously, i.e. a normal distribution. The normal distribution can be determined depending on or parametrized by previously utilized individual configurations.
The step "Initializing" the individual configurations is followed by determining the performance of each individual configuration according to the cost function. Subsequently, an Evolutionary Search is carried out until the current budget is depleted. The Evolutionary Search comprises the following steps:
Determining offspring configurations of the individual configurations by Mutating the individual configurations. Under Mutating, it can be understood that a plurality of individual configurations are combined to an offspring configuration. Preferably, the plurality of individual configurations are randomly selected, in particular among a same generation.

Preferably, the individual configurations are weighted combined. Preferably, it is checked whether all values of the offspring configurations are within a predetermined interval after Mutating. Afterwards, a plurality of the offspring configurations are selected by Crossover. Under Crossover, it can be understood that one of the offspring configurations replaces one of the individual configurations. The step of replacement may be randomly carried out, e.g. only if a randomly drawn number of a uniform distribution is larger than a predetermined crossover rate, e.g. 0.5, then the individual configuration is replaced by the, in particular a corresponding, offspring configuration, otherwise no replacement is carried out. Afterwards, the performance of the selected offspring configurations is determined according to the cost function. Afterwards, top-performing offspring configurations are selected and the selected top-performing offspring configurations replaces the, in particular corresponding, individual configurations. Under the term "top-performing" can be understood that the performance is determined in respect to the determined performance according to the cost function for this offspring configuration, e.g. by comparing the previous determined performance of the individual configurations with the performance of the selected offspring configurations. Afterwards, a predetermined number of low-performing individual configurations are discarded.

It is noted that after executing successively all steps of the Evolutionary search, parts of the current budget is used up.

If the Evolutionary Search is terminated, reconfiguring the number of individual configurations and reconfiguring the budget is carried out. Reconfiguring can comprise decreasing the number of sets by a predetermined number and increasing the current budget by a predetermined amount. After the step reconfiguring follows repeating in succession at least the steps "Initializing" and "Evolutionary Search" and "Reconfiguring" until a predefined maximal budget is reached.

If the maximal budget is reached, one of the individual configurations is returned as an optimal configuration. For instance, the optimal configuration is returned out of stored individual configurations stored after each of the Evolutionary searches carried out or the optimal configuration is returned out of one of the individual configurations of the last Evolutionary search carried out. Preferably, the optimal individual configuration is returned depending on the performance of the (stored) individual configurations.

The proposed method has the advantage, that due to the combination of decreasing the number of individual configurations and increasing the budget, it has improved convergence properties. This is beneficial, because typically the interactions with the system are expensive.

It is proposed that during repeating the step "Initializing", initializing the values of the sets is carried out depending on the values of the individual configurations after discarding the low-performing individual configurations. Preferably, the predetermined number of individuals is exponentially decreased depending on the increased budget.

It is further proposed that the predetermined number of low-performing individual configurations discarded is determined depending on the increased budget. This has the advantage that the search is only further carried out for relevant individual configurations, improving further the convergence.

It is further proposed that the system is a machine learning system, e.g. an artificial neural network.

It is proposed that the method of the first aspect is used for optimizing a configuration of the machine learning system. The configuration comprises parameters characterizing an architecture of the machine learning system and hyperparameters parametrizing a training method. The configuration can characterize parameters of the architecture of the machine learning system and/or parameters, e.g. weights, of the machine learning system. The architecture can characterize the sequence of layers and/or activation functions of the machine learning system. Using this method for machine learning systems has the advantage that an optimal configuration of the machine learning system can be found.

Preferably, the machine learning system comprises hidden layers, which are connected with each other by providing an output value as an input value for at least one of the hidden layers. The input layer can be connected with at least one of the hidden layers. The output layer receives at least one output value of the hidden layers and/or the output of the input layer as input. The machine learning system can be computer-implemented, for example as a (deep-) neural network or a convolutional neural network or a recurrent neural network or a CapsuleNetwork or a support vector machine, or a Gaussian Process.

Each step of determining the performance of each individual configuration is carried out by determining the performance of the machine learning system constructed according to the parameters and trained by the training method on training data. Therefore, it can be said that the machine learning system is constructed depending on the parameters and subsequently trained by the training method, which is configured to train the machine learning system depending on training data, wherein the cost function measures the performance of the trained machine learning system on the training data.

It is further proposed that at least maximal values or intervals of the parameters are selected depending on a resource (e.g. storage, computation performance, energy budget) of a computer on which the machine learning system is going to be carried out or on physical properties of the machine learning systems, e.g. time delay from input till output or total energy consumption for one input. Said maximal values or intervals are considered when carrying out the step initializing of the individual configurations. Optionally, the selection depending on the resource can be considered in the cost function by a constraint. This has the advantage that for given resources or hardware restrictions the most performant machine learning system is constructed.

It is further proposed that the machine learning system is constructed depending on the parameters and subsequently trained, wherein the cost function measures the performance of the, in particular trained, machine learning system on training data. Then, the cost function can be a loss function of the trained machine learning system trained on a training data set or on a validation data set, wherein the loss function characterized the performance of the trained machine learning system. The performance can be a total classification accuracy on the training data.

It is further proposed that the cost function is a loss function measuring a loss of the machine learning system on training data, wherein at least one of the parameters characterize a parameter of the loss function, e.g. a weight of a $l_2$ regularization of the loss function. This has the advantage that thanks to the proposed method, an optimal parameter of the loss function can be determined even if the parameter is discrete.

It is further proposed that at least one of the parameters is a hyperparameter, e.g. learning rate and/or batch size, of a training method configured training the machine learning system. The training method can be gradient descent based training method. Preferably, the machine learning system is trained to be a classifier, in particular an image classifier, where the inputs are sensor values from a camera or video camera.

The machine learning system can be a classifier. The machine learning system, in particular the classifier is configured to determine an output value, which characterizes a classification of the input value into at least one of several classes. In another embodiment, the machine learning system is configured to carry out a segmentation or a regression or object detection.

The term classification can be broadly understood. Classification can be that the machine learning system assigns to each input value of the machine learning system at least a class, wherein the class characterizes a property and/or a feature and/or an object of the input value. Segmentation can be seen as a special kind of classification, wherein for segmentation at least some of the elements of the input value are assigned to at least one class, also a semantic region can be assigned to at least one of the several classes. Image captioning and object recognition/detection can also be seen as a special kind of classification. The term regression means that the input value of the machine learning system is to be continued in a proper way by the machine learning system.

It is further proposed that the parameters characterize hyperparameters of a further optimizer, wherein the further optimizer is configured to optimize an architecture the machine learning system. The further optimizer may be configured to optimize an architecture of the machine learning system depending on a set of training data. The advantage is that thanks to the proposed method also discrete hyperparameters can be optimized.

It is further proposed that the training method is a reinforcement learning method, wherein a policy is trained for controlling a robot. It is proposed that the policy determines depending on a sensed input signal a controlling value for controlling the robot. The robot is controlled depending on the output of the policy.

It is proposed to utilize the machine learning system for a machine learning system. The machine learning system can be an intelligent machine like a robot, which learns to solve a predefined task, for example by exploring its environment and learning from feedback by its environment or from given feedback.

In a further aspect of the invention, the machine learning system, which is optimized or trained based on the method of the first aspect of the invention, the determined output value of the machine learning system can be used to determine control signal or control command. The control signal or the control command can be used to control the physical actuator. The physical actuator may be controlled corresponding to the control signal or the control command. In another embodiment, a control unit controls the physical actuator. The control unit can be configured to determine the control signal or the control command dependent on the output of the machine learning system. It is also possible that the control unit directly or indirectly controls the physical actuator dependent on the output value of the machine learning system.

The input values of the machine learning system can be received from sensor or can be received externally via the Internet or another data transmitting system or communication system.

In a further aspect of the present invention, a computer program is proposed, which is configured to carry out any of the previous mentioned aspects of the present invention. The computer program comprises commands which - when executed on a computer - cause said computer to carry out the methods with all of its steps of the different aspects of the present invention. Furthermore, a computer readable storage is proposed on which the computer program is stored. Furthermore, an apparatus is proposed which is configured to carry out the methods of the present invention.

Embodiments of the above-mentioned aspects of the present invention are described in the following description referring to following figures:

**Short description of the figures**

Fig. 1    shows a schematic depiction of two pseudo codes;
Fig. 2    shows a schematic depiction of an apparatus to carry out these pseudo codes.

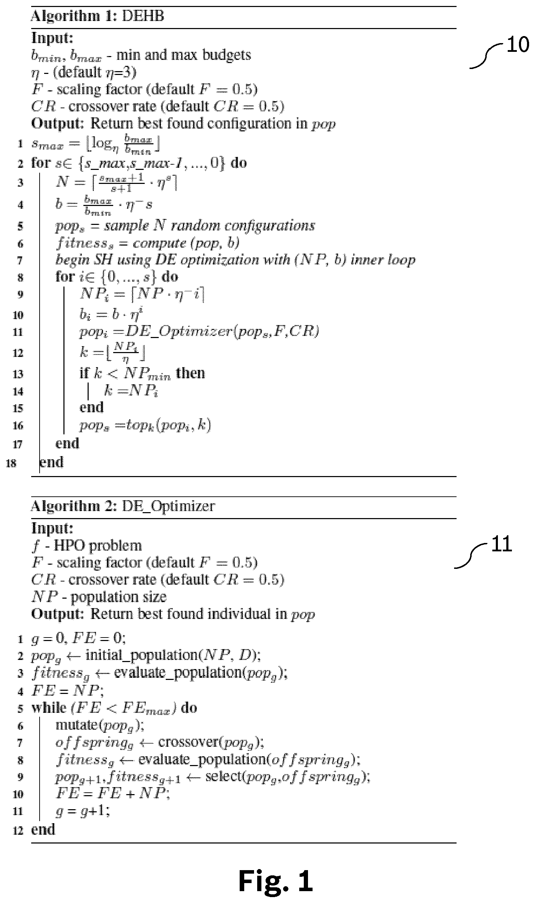

Figure 1 depicts schematically a first pseudo code (10) for optimizing values of parameters of a system, i.e. a machine learning system, and a second pseudo code (11) of an Evolutionary search.

The second pseudo code (11) is an Evolutionary search algorithm. Preferably, the Evolutionary search algorithm is a Differential Evolution (DE) search algorithm. This Evolutionary search algorithm is based mainly on four steps (Initialization, Mutation, Crossover and Selection) described in the following.

**Initialization.** DE is a population-based meta-heuristic algorithm, which consists of a population of NP individuals. In the following, the individuals of the population are also called configurations. Each individual is considered as a solution and expressed as a vector of $D$-dimensional decision variables, which are initialized uniformly at random in the search range. The dimension $D$ corresponds to the number of parameters to be optimized. This step is carried out in line 2 of the second pseudo code (11). In the subsequent line 3, the initialized population $pop_g$ is the evaluated by cost function "evaluate_population ()".

In line 5 of the pseudo code (11), a "while"-loop is carried out until a given criteria $FE\_max$ is reached. One iteration $i$ of the "while"-loop can be referred to as a generation $g_i$.

Step of Mutation is carried out in line 6 of the pseudo code (11).

**Mutation.** A new offspring is produced using a Mutation for each individual in the population by a so-called Mutation or Mutation strategy. For the classical DE, three random individuals $X_{r1}$; $X_{r2}$; $X_{r3}$ are chosen to generate a new vector $V_i$ as follows:

$$V_i; g = X_{r1}; g + F * (X_{r2}; g + X_{r3}; g) \qquad (1)$$

where $V_i$; $g$ is the mutant vector generated for each individual $X_i$; $g$ in the population. $F$ is a scaling factor, which usually takes values within the range [0,1], and $r1$; $r2$; $r3$ are the indices of different randomly selected individuals. It is noted that there are also different ways to determine the mutant vector, e.g., more than three random individuals can be used and/or the random variables can be combined by other math. operations.

In another embodiment, the random individuals $X_{r1}$; $X_{r2}$; $X_{r3}$ can be chosen depending on previous determined performances of the individuals. For instance, a Mutation strategy may be that a plurality of only good performing individuals are combined.

After the step Mutation has been executed, a Crossover is carried out, see line 7 of the second pseudo code (11).

**Crossover.** After the Mutation, a Crossover operation is applied to each target vector $X_i$; $g$ and its corresponding mutant vector $V_i$; $g$ to generate a trial vector $U_i$; $g$. Preferably, a simple binomial crossover is utilized, which chooses the value for each dimension $i$ from $V_i$; $_g$ with probability $CR$ and from $X_i$; $g$. The crossover can be determined as:

$$u_{i,g}^{j} = \begin{cases} v_{i,g}^{j} & if\ (CR < rand)\ or\ (j = j_{rand}) \\ x_{i,g}^{j} & otherwise \end{cases} \qquad (2)$$

the crossover rate CR is real-valued and can be specified in the range [0, 1]. This variable controls the portion of parameter values that are copied from the mutant vector. $j_{rand}$ is a random integer in the range [1, D]. The $j$-th parameter value may be copied from the mutant vector $v_{i,g}^{j}$ to the corresponding position in the trial vector $u_{i,g}^{j}$, if a random number rand is larger than $CR$. If the condition is not satisfied, then the j-th position is copied from the target vector $x_{i,g}^{j}$.

After determining the Crossover in line 7, an evaluation of the trial vector $U_i$; $g$ is determined. Subsequently, a selection is executed; compare line 9 of the second pseudo code (11).

**Selection.** After generating the trial vector $U_i$; $g$, DE computes its function value $f(U_i; g)$, keeping $U_i$; $g$ if it performs at least as well as $X_i$; $g$ and reverting back to $X_i$; $g$ otherwise.

The steps in the "while"-loop from line 5 to line 11 are iterated until the criteria $FE\_max$ is reached. The advantage of these steps is that this Evolutionary search scales to high dimensions and works very well for discrete dimensions.

From the state of the art, Hyperband (HB) is known. HB is a popular bandit strategy that dynamically allocates resources to a set of random configurations, a.k.a. individuals of the population, and uses successive halving to decide on which configurations to allocate more resources to. This method is based on multi-fidelity in which a small budget $b$ (e.g. total number of epochs or time) is allocated first to a large number of random configurations $N$. Then HB deploys the successive halving to discard the poorly performing configurations. At each iteration of successive halving, the number of continued configurations is decreased by a factor $\eta$ and the assigned budget for each configuration in increased by it.

The first pseudo code (10) shows schematic the proposed method referred to as Evolutionary-based Hyperband (DEHB). DEHB aims to combine properties of both DE and HB. On a high level, it selects budgets like HB and uses DE to optimize within a budget.

At the beginning of each HB iteration (line 2 of the first pseudo algorithm (10)), a number of N evaluations is determined based on HB and $N$ configurations are generated randomly. Each configuration can be considered as an individual, in particular as a set of parameter values, and is stored in a population denoted as *pop* with size $NP = N$, compare line 5 of the first pseudo algorithm (10).

Then the successive halving is carried out using *pop*, where for each iteration of successive halving an Evolutionary search is carried out. The goal is to evolve *pop* using Evolutionary search operations to sample new population with improved configurations using Evolutionary search. Preferably, the Evolutionary search is DE.

In line 8 of the first pseudo code (10), the Evolutionary search is carried out as a "for"-loop. It can be considered that the initial population for the first iteration of said "for"-loop as $pop_1$ which is the population of largest size NP. The benefit of having large population at the beginning of Evolutionary search is to explore as many regions as possible of the search space. For the first iteration, the smallest budget $b_{min}$ is utilized to evaluate the initial population. In line 11, the Evolutionary search algorithm is called. Here the second pseudo algorithm (11) is carried out with at least the basic operations of Evolutionary search, which are: Mutation, Crossover and Selection help to guide the Evolutionary search to the promising region.

In the subsequent lines 12 to 16, the returned population $pop_i$ is rearranged. Here, only the $k$-top-performing indiviudals of the population $pop_i$ are reused for the next iteration of the "for"-loop. This means that after performing Evolutionary search for a plurality of generations $g$ (compare line 11), only the top-performing configurations are forwarded to the next iteration of hyperband. Hence, the population size is reduced and the top-performing individuals are used to be the new population for a new Evolutionary search using a larger budget ($b_i = b_i \, \eta^i$). At the last iteration of HB, the population has a small size and hence the Evolutionary operations focus their search around the best-so-found configurations to perform more exploitation using the full large budget $b_{max}$.

Each returned population after the "for"-loop in line 8 to 17 can be stored. After carrying out all iterations over the "for"-loop in line 2, the population with the highest performance can be returned as an optimal configuration.

In a further embodiment, when repeating the "for"-loop in line 2 for sampling a new population $pop_{s+1}$, the sampling may be carried out depending on the retuned populations $pop_s, pop_{s-1}, ..., pop_{s-m}$ comprising the $k$-top-performing individuals. In a further embodiment, the new population can be determined depending on previous populations by a Bayesian Optimization (BO). BO can be used in line 5 for sampling those configurations with a high uncertainty and/or high expected performance or expected improvement. For more details, see recited publication "BOHB: Robust and efficient hyperparameter optimization at scale" sec. 3.1, in particular eq. (1) and (2).

In a further embodiment, the individual comprises at least a value of a parameter of a technical system. The system may be machine learning system. The parameters can characterize an architecture of the machine learning system and/or hyperparameters of a training method for training the machine learning system. DEHB can be used to optimize values of the parameters during training of the machine learning system.

This trained machine learning system can be utilized in different ways, as disclosed in the following.

In a first embodiment, the trained machine learning system can be used for an actuator in its environment. Actuator interacts with an actuator control system. Actuator and its environment will be jointly called actuator system. At preferably evenly spaced distances, a sensor senses a condition of the actuator system. The sensor may comprise several sensors. An output signal S of sensor (or, in case the sensor comprises a plurality of sensors, an output signal S for each of the sensors) which encodes the sensed condition is transmitted to the actuator control system. In another embodiment, the actuator control system can receive fictive sensor values for testing the actuator control system.

Thereby, actuator control system receives a stream of sensor signals S. It the computes a series of actuator control commands A depending on the stream of sensor signals S, which are then transmitted to actuator.

Actuator control system receives the stream of sensor signals S of sensor in an optional receiving unit. Receiving unit transforms the sensor signals S into input signals x. Alternatively, in case of no receiving, each sensor signal S may directly be taken as an input signal x. Input signal x may, for example, be given as an excerpt from sensor signal S. Alternatively, sensor signal S may be processed to yield input signal x. Input signal x may, for example, comprise images, or frames of video recordings. In other words, input signal x is provided in accordance with sensor signal S.

Input signal x is then passed on to trained machine learning learning system, which may, for example, be given by the neural network.

The machine learning system determines output signals y from input signals x. Output signals y are transmitted to a conversion unit, which converts the output signals y into control signals or control commands A. Actuator control commands A are then transmitted to actuator for controlling actuator accordingly.

Actuator receives actuator control commands A, is controlled accordingly and carries out an action corresponding to actuator control commands A. Actuator may comprise a control logic, which transforms actuator control command A into a further control command, which is then used to control actuator.

In further embodiments, actuator control system may comprise sensor. The sensor can be a camera, Radar or Lidar sensor. The sensors are not limited to those, other conceivable sensor as audio sensor are also applicable. In even further embodiments, actuator control system alternatively or additionally may comprise actuator.

Alternatively or additionally to actuator, the embodiment may comprise a display unit which may also be controlled in accordance with actuator control commands A. Alternatively, the display unit belongs to a measurement system, wherein the machine learning system is used to determine a measurement value dependent on the input value.

In all of the above embodiments, machine learning system may comprise a classifier that is configured to classify the input signal x belongs to one of several predefined classes. In another embodiment, the machine learning system is configured to classify an image region or is configured to pixel-wise classify an image.

Additionally or alternatively, the output signal y or the control signal or control command A is displayed on a display unit.

In a furhter embodiment, the actuator control system is used to control an at least partially autonomous robot, e.g. an at least partially autonomous vehicle, dependent on the output value of the machine learning system.

Sensor may comprise one or more video sensors and/or one or more radar sensors and/or one or more ultrasonic sensors and/or one or more LiDAR sensors and or one or more position sensors (like e.g. GPS). Some or all of these sensors are preferably but not necessarily integrated in vehicle. Alternatively or additionally sensor may comprise an information system for determining a state of the actuator system. One example for such an information system is a weather information system, which determines a present or future state of the weather in environment. Further information can be received by communication system or via the internet.

For example, using input signal x, the machine learning system may for example detect objects in the vicinity of the at least partially autonomous robot. Output signal y may comprise an information that characterizes objects, which are located in the vicinity of the at least partially autonomous robot. Control command A may then be determined in accordance with this information, for example to avoid collisions with said detected objects.

Actuator, which is preferably integrated in vehicle, may be given by a brake, a propulsion system, an engine, a drivetrain, or a steering of vehicle. Actuator control commands A may be determined such that actuator (or actuators) is/are controlled such that vehicle avoids collisions with said detected objects. Detected objects may also be classified according to what they machine learning system deems them most likely to be, e.g. pedestrians or trees, and actuator control commands A may be determined depending on the classification.

In further embodiments, the at least partially autonomous robot may be given by another mobile robot (not shown), which may, for example, move by flying, swimming, diving or stepping. The mobile robot may, inter alia, be an at least partially autonomous lawn mower, or an at least partially autonomous cleaning robot. In all of the above embodiments, actuator command control A may be determined such that propulsion unit and/or steering and/or brake of the mobile robot are controlled such that the mobile robot may avoid collisions with said identified objects.

In a further embodiment, the at least partially autonomous robot may be given by a gardening robot (not shown), which uses sensor, preferably an optical sensor, to determine a state of plants in the environment. Actuator may be a nozzle for spraying chemicals. Depending on an identified species and/or an identified state of the plants, an actuator control command A may be determined to cause actuator to spray the plants with a suitable quantity of suitable chemicals.

In even further embodiments, the at least partially autonomous robot may be given by a domestic appliance (not shown), like e.g. a washing machine, a stove, an oven, a microwave, or a dishwasher. Sensor, e.g. an optical sensor, may detect a state of an object, which is to undergo processing by the household appliance. For example, in the case of the domestic appliance being a washing machine, sensor may detect a state of the laundry inside the washing machine. Actuator control signal A may then be determined depending on a detected material of the laundry.

In a further embodiment, the actuator control system is used to control a manufacturing machine, e.g. a punch cutter, a cutter or a gun drill) of a manufacturing system, e.g. as part of a production line. The actuator control system controls an actuator which in turn control the manufacturing machine dependent on the output value of the machine learning system of of the actuator control system.

Sensor may be given by an optical sensor, which captures properties of e.g. a manufactured product. Machine learning system may determine a state of the manufactured product or the manufactured product itself from these captured properties. Actuator which controls manufacturing machine may then be controlled depending on the determined state of the manufactured product for a subsequent manufacturing step of manufactured product determined by the machine learning system or determined by the actuator control system. Alternatively, it may be envisioned that actuator is controlled during manufacturing of a subsequent manufactured product depending on the determined state of the manufactured product.

In a further embodiment, the actuator control system is used for controlling an automated personal assistant. In a preferred embodiment, sensor may be an acoustic sensor, which receives voice commands of a human user. Sensor may also comprise an optic sensor, e.g. for receiving video images of a gestures of user.

Actuator control system then determines actuator control commands A for controlling the automated personal assistant. The actuator control commands A are determined in accordance with sensor signal S of sensor. Sensor signal S is transmitted to the actuator control system. For example, machine learning system may be configured to e.g. carry out a gesture recognition algorithm to identify a gesture made by user, or it may be configured to carry out a voice command recognition algorithm to identify a spoken command uttered by user. Actuator control system may then determine an actuator control command A for transmission to the automated personal assistant. It then transmits said actuator control command A to the automated personal assistant.

For example, actuator control command A may be determined in accordance with the identified user gesture or the identified user voice command recognized by machine learning system. It may then comprise information that causes the automated personal assistant to retrieve information from a database and output this retrieved information in a form suitable for reception by user.

In further embodiments, it may be envisioned that instead of the automated personal assistant, actuator control system controls a domestic appliance (not shown) controlled in accordance with the identified user gesture or the identified user voice command. The domestic appliance may be a washing machine, a stove, an oven, a microwave or a dishwasher.

In a further embodiment, the actuator control system controls an access control system. Access control system may be designed to physically control access. It may, for example, comprise a door. Sensor is configured to detect a scene that is relevant for deciding whether access is to be granted or not. It may for example be an optical sensor for providing image or video data, for detecting a person's face. Machine learning system may be configured to interpret this image or video data e.g. by matching identities with known people stored in a database, thereby determining an identity of the person. Actuator control signal A may then be determined depending on the interpretation of machine learning system, e.g. in accordance with the determined identity. Actuator may be a lock, which grants access or not depending on actuator control signal A. A non-physical, logical access control is also possible. In another embodiment, the actuator control system controls a heating system, wherein the actuator control system is configured to determine the desired climate of the owner dependent on a measured temperature and/or humidity values and optionally dependent on a weather forecast or the daytime.

In a further embodiment, the actuator control system is used for controlling an imaging system, for example an MRI apparatus, x-ray imaging apparatus or ultrasonic imaging apparatus. Sensor may, for example, be an imaging sensor, the sensed image of which is interpreted by machine learning system. Actuator control signal A may then be chosen in accordance with this interpretation, thereby controlling display. For example, machine learning system may interpret a region of the sensed image to be potentially anomalous. In this case, actuator control signal A may be determined to cause display to display the imaging and highlighting the potentially anomalous region.

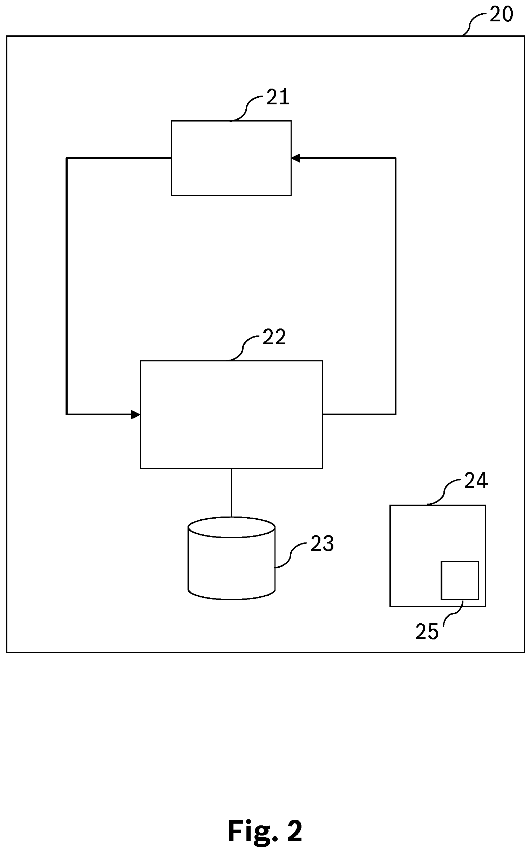

Figure 2 depicts schematically an apparatus (20) configured to carry out the pseudo codes of figure 1. A storage (25) comprises commands, which are configured, when executed on a computer (24), that the computer (24) carries out the method for optimizing values of parameters of a system (22) according to the pseudo codes of figure 1. The module (21) proposes new parameters for the system (22). The system (22) is tested with the new parameters. Parameters of the system (22) are stored in a storage (23).

**Claims**

1. Computer-implemented method for optimizing a configuration of a machine learning system in accordance with a cost function, wherein the configuration comprises parameters characterizing an architecture of the machine learning system and hyperparameters parametrizing a training method, wherein the cost function measures a performance of the machine learning system configured according to the parameters and trained by the training method, wherein the method comprises the following steps:

   a) Providing a budget *b*;
   b) Initializing a first predetermined number of individual configurations *(pops),* wherein each individual configuration *(pop$_s$)* comprises one possible set of values of said parameters;
   c) Determining the performance of the machine learning systems constructed depending on the parameters of each individual configuration *(pop$_s$)* and trained by the training method parametrized by the hyperparameters of each individual configurations on training data according to the cost function;
   d) Starting an Evolutionary search until the budget *b* is exhausted, comprising:

      I. Generating offspring configurations of the individual configurations by a Mutation of the individual configurations;

II. Selecting a plurality of the offspring configurations by Crossover,

III. Determining the performance of the machine learning systems constructed depending on the parameters of each selected offspring configuration and trained by the training method parametrized by the hyperparameters of each selected offspring configurations on the training data according to the cost function,

IV. Selecting top-performing offspring configurations and replacing some of the individual configurations ($pop_S$) by the top-performing offspring configurations, and

V. Discarding a second predetermined number of low-performing individual configurations ($pop_S$);

e) Reconfiguring, comprising decreasing the number of the individual configurations by a third predetermined number and increasing the budget $b$ by a predetermined amount;

f) Repeating a sequence each comprising the above steps of b) "Initializing" and d) "Evolutionary Search" and e) "Reconfiguring" until a predefined maximal budget is reached; and

g) Returning one of the individual configurations ($pop_S$) as optimal configuration.

2. Method according to claim 1, wherein during repeating the sequence, for each repetition of the step b) "Initializing", the first predetermined number of individual configurations is decreased depending on the increased budget.

3. Method according to claim 1 or claim 2, wherein the top-performing offspring configurations are selected to comprise those among the offspring configurations that perform better than at least a selected reference configuration.

4. Method according to claim 3, wherein said reference configuration is the best-performing, in particular those with the best-determined performance, configuration among all generated individual configurations, in particular including the initialized individual configurations.

5. Method according to any of the above claims, wherein during repeating the step b) "Initializing", the individual configurations are initialized depending on the individual configurations after discarding the low-performing individual configurations determined by step d)V. "Discarding".

6. Method according to any one of the above claims, wherein the third predetermined number is determined depending on the increased budget.

7. Method according to any one of the above claims, wherein each possible set of parameter values are determined depending on a predetermined available resource of a target computer for which the machine learning system is optimized and/or depending on resources required by said optimized machine learning system when it is carried out on said target computer.

8. Method according to any of the above claims, wherein the cost function is a loss function measuring a loss of the machine learning system on the training data, wherein at least one of the hyperparameters of the individual configuration is a parameter of the loss function.

9. Method according to any of the above claims, wherein the training method is a reinforcement learning method utilizing the machine learning system to train a policy for controlling a robot.

10. Computer program, which is configured, when executed out on a computer, that the computer carries out the method according to any of the above claims 1 to 9.

11. Machine-readable storage, which comprises the computer program according to claim 10.

12. Apparatus configured to carry out the method according to any of the above claims 1 to 9.

---

**Algorithm 1: DEHB**

---

**Input:**
$b_{min}$, $b_{max}$ - min and max budgets
$\eta$ - (default $\eta=3$)
$F$ - scaling factor (default $F = 0.5$)
$CR$ - crossover rate (default $CR = 0.5$)
**Output:** Return best found configuration in $pop$

$s_{max} = \lfloor \log_\eta \frac{b_{max}}{b_{min}} \rfloor$

**for** $s\in \{s\_max, s\_max\text{-}1, ..., 0\}$ **do**

  $N = \lceil \frac{s_{max}+1}{s+1} \cdot \eta^s \rceil$

  $b = \frac{b_{max}}{b_{min}} \cdot \eta^- s$

  $pop_s = $ sample $N$ random configurations

  $fitness_s = compute\ (pop, b)$

  begin SH using DE optimization with $(NP, b)$ inner loop

  **for** $i\in \{0, ..., s\}$ **do**

    $NP_i = \lceil NP \cdot \eta^- i \rceil$

    $b_i = b \cdot \eta^i$

    $pop_i = DE\_Optimizer(pop_s, F, CR)$

    $k = \lfloor \frac{NP_i}{\eta} \rfloor$

    **if** $k < NP_{min}$ **then**

      $k = NP_i$

    **end**

    $pop_s = top_k(pop_i, k)$

  **end**

**end**

*(reference 10)*

---

**Algorithm 2: DE_Optimizer**

---

**Input:**
$f$ - HPO problem
$F$ - scaling factor (default $F = 0.5$)
$CR$ - crossover rate (default $CR = 0.5$)
$NP$ - population size
**Output:** Return best found individual in $pop$

$g = 0, FE = 0$;

$pop_g \leftarrow$ initial_population($NP, D$);

$fitness_g \leftarrow$ evaluate_population($pop_g$);

$FE = NP$;

**while** $(FE < FE_{max})$ **do**

  mutate($pop_g$);

  $offspring_g \leftarrow$ crossover($pop_g$);

  $fitness_g \leftarrow$ evaluate_population($offspring_g$);

  $pop_{g+1}, fitness_{g+1} \leftarrow$ select($pop_g, offspring_g$);

  $FE = FE + NP$;

  $g = g+1$;

**end**

*(reference 11)*

# Fig. 1

**Fig. 2**

Europäisches
Patentamt

European
Patent Office

Office européen
des brevets

# EUROPEAN SEARCH REPORT

**Application Number**

EP 19 19 9273

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ARBER ZELA ET AL: "Towards Automated Deep Learning: Efficient Joint Neural Architecture and Hyperparameter Search", ARXIV.ORG, CORNELL UNIVERSITY LIBRARY, 201 OLIN LIBRARY CORNELL UNIVERSITY ITHACA, NY 14853, 18 July 2018 (2018-07-18), XP081113830, * section 3 * | 1-12 | INV. G06N3/12 G06N20/20 G06N5/00 |
| A | KRZYSZTOF MAZIARZ ET AL: "Evolutionary-Neural Hybrid Agents for Architecture Search", ARXIV.ORG, CORNELL UNIVERSITY LIBRARY, 201 OLIN LIBRARY CORNELL UNIVERSITY ITHACA, NY 14853, 4 June 2019 (2019-06-04), XP081368787, * the whole document * | 1-12 | |
| A | LIOR FUKS ET AL: "An Evolution Strategy with Progressive Episode Lengths for Playing Games", PROCEEDINGS OF THE TWENTY-EIGHTH INTERNATIONAL JOINT CONFERENCE ON ARTIFICIAL INTELLIGENCE, 10 August 2019 (2019-08-10), pages 1234-1240, XP055683310, California DOI: 10.24963/ijcai.2019/172 ISBN: 978-0-9992411-4-1 * the whole document * | 1-12 | |

**TECHNICAL FIELDS SEARCHED (IPC)**

G06N

The present search report has been drawn up for all claims

| Place of search | Date of completion of the search | Examiner |
|---|---|---|
| The Hague | 6 April 2020 | Douarche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- BOHB: Robust and efficient hyperparameter optimization at scale. *arXiv preprint arXiv:1807.01774,* 2018

- Differential evolution-a simple and efficient heuristic for global optimization over continuous spaces. *Journal of global optimization,* 1997, vol. 11.4, 341-359